# EUROPEAN PATENT APPLICATION

(11) **EP 2 876 884 A1**
(43) Date of publication of application: **27.05.2015**
(21) Application number: 14191000.0
(22) Date of filing: 30.10.2014
(51) Int. Cl.: H04N 19/51, H04N 19/433

(54) **Motion compensation with moving window**

(30) Priority: 26.11.2013 US 201314089902
(71) Applicant: ViXS Systems Inc., Toronto, ON M2K 1E3 (CA)
(72) Inventor: Guo, Xin, Toronto, Ontario M6G 2K3 (CA); Li, Xinghai, North York, Ontario M2J 4S6 (CA)
(74) Representative: Benson, Christopher

(57) **Abstract**

A video encoder employs a relatively small sized cache for motion compensation. A motion search module selects an initial subset of the full reference picture and has it transferred to the cache. For a first set of blocks of a current picture, the motion search module calculates a set of motion vectors using the reference picture subset stored at the cache. Based on the set of motion vectors, the motion search module identifies an offset that indicates a predicted direction of motion. Based on the offset, the motion search module identifies another subset of the reference picture and transfers the identified subset to the cache for calculation of the next set of motion vectors.

## Description

### BACKGROUND

### Field of the Disclosure

The present disclosure relates generally to encoding of video signals and more particularly to motion compensation for encoding of video signals.

### Description of the Related Art

In many electronic devices, video information is encoded to reduce the size of the information and thus reducing the resources required to communicate or store the video information. The encoded video information is typically decoded before it is displayed. To ensure reliable communication of video information between different electronic devices, standards have been promulgated for many encoding methods including the H.264 standard that is also referred to as MPEG-4, part 10 or Advanced Video Coding (AVC). The processing of video information, including the encoding thereof, frequently requires motion compensation based on comparisons between a reference picture and a current picture embedded in the video information. Because the number of comparisons can put a severe strain on memory bandwidth and other device resources, the reference picture is typically placed in a cache for access during the motion compensation process.

### SUMMARY OF THE INVENTION

According to aspects of the present invention there is provided methods and apparatus as set forth in the appended claims.

According to a further aspect of the present invention there is provided a method, comprising selecting, based on a first set of motion vectors, a first subset of pixels of a reference picture; and transferring the first subset of pixels from a memory to a cache to identify a second set of motion vectors.

The method may further comprise selecting, based on the second set of motion vectors, a second subset of pixels of the reference picture; and transferring the second subset of pixels from the memory to the cache to identify a third set of motion vectors.

Selecting the first subset of pixels may comprise calculating an offset value based on components of the set of motion vectors for a first direction; and selecting the first subset of the reference picture based on the offset value.

Calculating the offset value may comprise averaging the components of the set of motion vectors.

Calculating the offset value may comprise performing a regression analysis based on the components of the set of motion vectors.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a video encoder in accordance with some embodiments.
FIG. 2 is a block diagram illustrating an example of transferring a subset of a reference picture to a cache for motion search in accordance with some embodiments.
FIG. 3 is a block diagram illustrating an example of selecting a subset of a reference picture to transfer to a cache based on a set of motion vectors in accordance with some embodiments.
FIG. 4 is a flow diagram of a method of performing motion search for processing video in accordance with some embodiments.

### DETAILED DESCRIPTION OF EMBODIMENT(S)

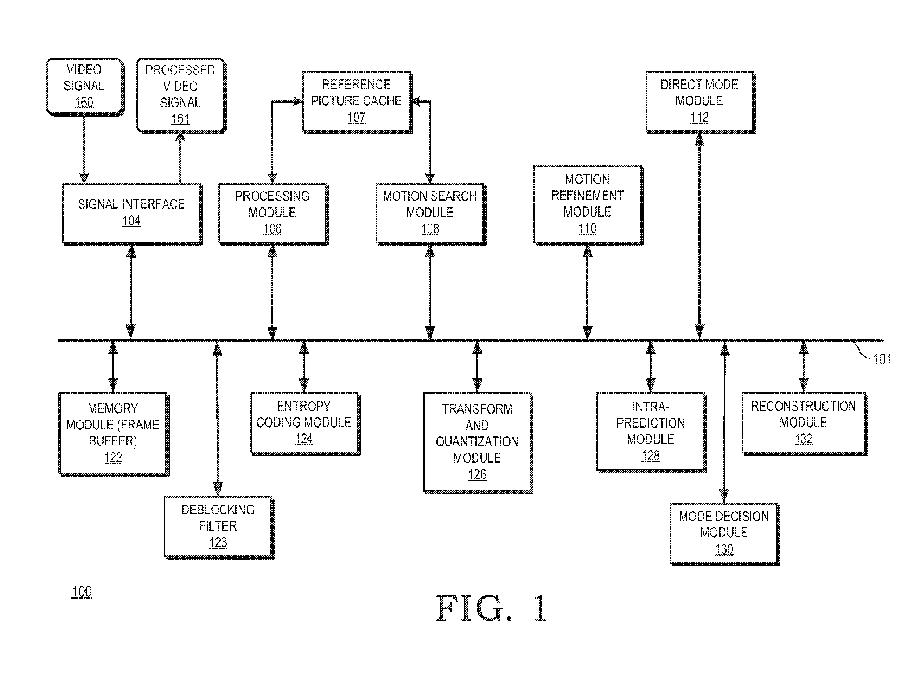

FIGs. 1-4 disclose techniques for employing a cache to store a reference picture for motion compensation in video processing, wherein the cache is sized to store only a subset of the full reference picture. To employ the reduced size cache for motion compensation, a motion search module selects an initial subset of the full reference picture and has it transferred to the cache. For a first set of blocks of a current picture, the motion search module calculates a set of motion vectors using the reference picture subset stored at the cache. Based on the set of motion vectors, the motion search module identifies an offset that indicates a predicted direction of motion. Based on the offset, the motion search module identifies another subset of the reference picture and transfers the identified subset to the cache for calculation of the next set of motion vectors. In similar fashion, the motion search module continues to transfer to the cache subsets of the reference picture, selected based on a previously calculated set of motion vectors, for calculation of the next set of motion vectors. This ensures that the most likely subset of the reference picture that will result in a useful set of motion vectors is transferred to the cache, while allowing the cache to be of a relatively smaller size, conserving circuit area.

FIG. 1 presents a block diagram representation of a video encoder 100 in accordance with an embodiment of the present invention. In particular, video encoder 100 can be a video codec that operates in accordance with many of the functions and features set forth in the H.264 standard, the MPEG-4 standard, VC-1 (SMPTE standard 421M) or other standard, to encode, decode or transcode a video signal 160 to produce a processed video signal 161.

The video encoder 100 includes a signal interface 104 for receiving and conditioning the video signal 160 so that the signal is ready for processing. Accordingly, the signal interface 104 can include one or more amplifiers, filters, clock synchronization modules, and the like to ensure that the video signal 160 is in a specified condition so that it can be processed by other modules of the video encoder 100, as described below. In addition, the signal interface 104 is configured to receive the resulting processed video information, and condition the information to produce the processed video signal 161, so that the processed video signal 161 complies with a specified format for communication to another module or device.

The video encoder 102 includes a processing module 106 that can be implemented using a single processing device or a plurality of processing devices. Such a processing device may be a microprocessor, processor core, set of co-processors, a micro-controller, digital signal processor, microcomputer, central processing unit, field programmable gate array, programmable logic device, state machine, logic circuitry, analog circuitry, digital circuitry, or any combination thereof, and/or any device that manipulates signals (analog and/or digital) based on operational instructions that are stored in a memory, such as memory module 122.

Memory module 122 may be a single memory device or a plurality of memory devices. Such a memory device can include a hard disk drive or other disk drive, read-only memory, random access memory, volatile memory, non-volatile memory, static memory, dynamic memory, flash memory, cache memory, or any combination thereof, and/or any device that stores digital information. Note that when the processing module implements one or more of its functions via a state machine, analog circuitry, digital circuitry, and/or logic circuitry, the memory storing the corresponding operational instructions may be embedded within, or external to, the circuitry comprising the state machine, analog circuitry, digital circuitry, and/or logic circuitry.

Processing module 106 and memory module 122 are coupled, via bus 101, to the signal interface 104 and a plurality of other modules, such as motion search module 108, motion refinement module 110, direct mode module 112, intra-prediction module 128, mode decision module 130, reconstruction module 132, entropy coding/reorder module 124, forward transform and quantization module 126, deblocking filter module 123, and a reference picture cache 107. The modules of video encoder 102 can be implemented in software or firmware and be structured as operations performed by processing module 106. Alternatively, one or more of these modules can be implemented using a hardware engine that includes a state machine, analog circuitry, digital circuitry, and/or logic circuitry, and that operates either independently or under the control and/or direction of processing module 106 or one or more of the other modules, depending on the particular implementation. It should also be noted that the software implementations of the present invention can be stored on a tangible storage medium such as a magnetic or optical disk, read-only memory or random access memory and also be produced as an article of manufacture. While a particular bus architecture is shown, alternative architectures using direct connectivity between one or more modules and/or additional busses can likewise be implemented in accordance with the present invention.

Video encoder 100 can operate in various modes of operation that include an encoding mode and a decoding mode that is set by the value of a mode selection signal (not shown) that may be a user defined parameter, user input, register value, memory value or other signal. In addition, in video encoder 100, the particular standard used by the encoding or decoding mode to encode or decode the input signal can be determined by a standard selection signal that also may be a user defined parameter, user input, register value, memory value or other signal. In an embodiment of the present invention, the operation of the encoding mode utilizes a plurality of modules that each perform a specific encoding function. The operation of decoding also utilizes at least one of these plurality of modules to perform a similar function in decoding. In this fashion, modules such as the motion refinement module 110 and more particularly an interpolation filter used therein, and intra-prediction module 128 can be used in both the encoding and decoding process to save on architectural real estate when video encoder 100 is implemented on an integrated circuit or to achieve other efficiencies. In addition, some or all of the components of the direct mode module 112, mode decision module 130, reconstruction module 132, transformation and quantization module 126, deblocking filter module 123 or other function specific modules can be used in both the encoding and decoding process for similar purposes.

The motion search module 108 processes pictures from the video signal 160 based on a segmentation of each picture into blocks (e.g. macroblocks) of pixel values, such as a macroblock of 16 pixels by 16 pixels, from the columns and rows of a frame and/or field of the video signal 160. In at least one embodiment, the processing module 106 stores reference pictures received via the video signal 160 at the memory module 122 (e.g. a frame buffer). As described further herein, the motion search module 108 transfers subsets of each reference picture to the reference picture cache 107 to perform motion search for motion compensation. As used herein, a subset pixels of a reference picture refers to a less than all of the pixels of the reference picture, and is sometimes referred to as a subset of the reference picture. For example, if the reference picture is sized at 1024 by 800 pixels, a subset of the reference picture includes some, but not all of these pixels. Thus, a subset of pixels of the reference picture can be 1024 by 200 pixels, 512 by 800 pixels, 512 by 400 pixels, or other size.

The reference picture cache 107 is a memory structure that can be accessed by the motion search module 108 more quickly than the memory module 122, allowing for motion search to be performed more quickly. The reference picture cache 107 is sized such that it cannot store an entire reference picture, but instead can only store a subset of the pixels of the reference picture. That is, the reference picture cache 107 is a smaller size than the reference picture. In at least one embodiment, the reference picture cache 107 is constructed such that it does not have sufficient bit cells to store pixel data for the entire reference picture. In another embodiment, the reference picture cache 107 is a portion of a larger memory structure that may be able to store the entire reference picture, but space in the larger memory structure is allotted such that only a subset of the reference picture can be stored at the memory structure for motion search. For example, only a subset of memory addresses at the larger memory structure may be assigned to the motion search module 108 for storage of reference picture information for motion search.

To perform motion search, the motion search module 108 accesses, at the memory module 122 the next non-reference picture (the next picture to be encoded), referred to for purposes of description as the "current picture" to be encoded. The motion search module 108 then divides the current picture into blocks, and selects a set of the blocks for encoding. For purposes of description, it is assumed that the motion search module 108 selects the set of blocks along a horizontal direction (x-axis) of the current picture, and the set of blocks is therefore referred to as a "block row". However, it will be appreciated that a different set of blocks can be selected by the motion search module without departing from the scope of the present disclosure.

To encode the first block row, the motion search module 108 selects a predefined subset of the reference picture stored at the memory module 122 and transfers it to the reference picture cache 107. The motion search module 108 subdivides each block of the first block row into sub-blocks, and identifies one or more motion vectors that represent displacement of sub-blocks of the received picture from a corresponding block of the reference picture subset stored at the reference picture cache 107. In operation, the motion search module 108 operates within a search range to locate a subblock in the current picture to an integer pixel level accuracy such as to a resolution of 1-pixel. Candidate locations are evaluated based on a cost formulation to determine the location and corresponding motion vector that have a most favorable (such as lowest) cost. In some embodiments, a cost formulation for each motion vector is based on the Sum of Absolute Difference (SAD) between the reference macroblock and candidate macroblock pixel values and a weighted rate term that represents the number of bits required to be spent on coding the difference between the candidate motion vector and a predicted motion vector (PMV). The motion search module 108 thus identifies a set of motion vectors, with each motion vector in the set indicating the corresponding displacement between a block of the current picture and a block of the reference picture subset stored at the reference picture cache 107.

The motion search module 108 uses the set of motion vectors for the first block row to identify the subset of the reference picture to be used to identify the set of motion vectors for the next block row. To illustrate, each motion vector in the set indicates a displacement of a macroblock of the reference picture. Accordingly, the motion search module aggregates the set of motion vectors to identify an offset value that gives a general characterization of the overall displacement for the first block row relative to the reference picture. Because it is likely that other nearby portions of the reference picture are similarly displaced relative to the current picture, the offset value can be used to identify the subset of the reference picture that is most likely to include blocks corresponding to the next block row of the current picture. For example, the offset value may indicate that, on average, the blocks of the first block row of the current picture are offset by +2 pixels, in the vertical direction (along the y-axis) relative to the blocks of the reference picture, the blocks of the second block row are also likely offset by 2 pixels in the vertical direction. Accordingly, for encoding the second block row, the motion search module 108 selects the subset of the reference picture that includes the pixels of the second block row offset by -2. Thus, the pixels of the second block row may be defined by the rectangle having the following pixels at the corners: (0, 8), (599, 8), (0, 15), and (599, 15). Accordingly, the motion search module 108 selects the subset of the reference block to ensure that it includes the pixels in the rectangle having the following pixels at the corners: (0,6), (599, 6), (0, 13), and (599, 13). This ensures that, if the displacement of the blocks of the second block row, relative to the reference picture, are similar to that of the general displacement for the first block row, the selected subset of the reference picture includes blocks that are likely to match blocks of the second block row, thus enhancing the likelihood of locating useful motion vectors.

In at least one embodiment, the reference picture cache 107 is sized such that its width matches the width of the reference picture, but its height is smaller than that of the reference picture. In such a scenario, the subset of the reference picture to be used for motion search is dependent only upon displacement in the vertical direction. Accordingly, to calculate the offset value the motion search module uses only the y-component of each motion vector in the set of motion vectors. In other embodiments, the reference picture cache is sized such that only the x-component of each motion vector is used to identify the offset value. For purposes of description, it is assumed that only the y-components of the motion vectors are used.

The offset value can be calculated in any of a variety of ways. In at least one embodiment, the offset value is identified by calculating an average of the motion vectors in the set. In another embodiment, the motion search module 108 calculates the offset by performing a linear regression analysis of the motion vectors in the set. Once the offset has been calculated, the motion search module 108 identifies the subset of the reference picture that is to be employed for motion search of the next block row. In at least one embodiment the motion search module 108 identifies the subset by subtracting the offset value from the corresponding components of the pixels that define the corners of the next block row, in similar fashion as described above. The resulting values define the corners of the identified subset of the reference picture. In at least one embodiment, the motion search module adds a tolerance value to the offset, and then subtracts the resulting value from the corresponding components of the pixels that define the corners of the next block row. The resulting values identify the corners of the identified subset of the reference picture. The motion search module 108 then transfers the identified subset of the reference picture to the reference picture cache 107 for determination of the set of motion vectors for the next block row of the current picture.

The motion search module 108 identifies, for each block row of the current picture, a set of motion vectors based on the block row and a subset of the reference picture selected based on an offset identified from the set of motion vectors for the previous block row, in similar fashion to that described above. The motion search module 108 thus identifies, for each block of the reference picture, a corresponding motion vector.

The motion refinement module 110 generates a refined motion vector for each block of the plurality blocks of the current picture, based on the corresponding motion search motion vector. In an embodiment of the present invention, the motion refinement module determines, for each block or block pair of a field and/or frame of the video signal 160, a refined motion vector that represents the displacement of the macroblock from a reference picture or reference field of the video signal to a current frame or field.

Based on the pixels and interpolated pixels, the motion refinement module 110 refines the location of the block in the current frame or field to a greater pixel level accuracy such as to a resolution of 1/4-pixel or other sub-pixel resolution. Candidate locations are also evaluated based on a cost formulation to determine the location and refined motion vector that have a most favorable (such as lowest) cost. As in the case with the motion search module, a cost formulation can be based on the a sum of the Sum of Absolute Difference (SAD) between the reference block and candidate block pixel values and a weighted rate term that represents the number of bits required to be spent on coding the difference between the candidate motion vector and either a predicted motion vector (PMV). In this fashion, motion refinement module 110 is able to operate on a block to contemporaneously determine the motion search motion vector for each subblock of the block.

When estimated predicted motion vectors are used, the cost formulation avoids the use of motion vectors from the current row and both the motion search module 108 and the motion refinement module 110 can operate in parallel on an entire row of video signal 160, to contemporaneously determine the refined motion vector for each block in the row.

The direct mode module 112 generates a direct mode motion vector for each block, based on blocks that neighbor the block. In an embodiment of the present invention, the direct mode module 112 operates to determine the direct mode motion vector and the cost associated with the direct mode motion vector based on the cost for candidate direct mode motion vectors for the B slices of video signal 160, such as in a fashion defined by the H.264 standard.

While the prior modules have focused on inter-prediction of the motion vector, intra-prediction module 128 generates a best intra-prediction mode for each block of the plurality of blocks. In an embodiment of the present invention, intra-prediction module 128 operates as defined by the H.264 standard, however, other intra-prediction techniques can likewise be employed. In particular, intra-prediction module 128 operates to evaluate a plurality of intra prediction modes such as an Intra-4X4 or Intra-16X16, which are luma prediction modes, chroma prediction (8X8) or other intra coding, based on motion vectors determined from neighboring blocks to determine the best intra prediction mode and the associated cost.

The mode decision module 130 determines a final block cost for each block of the plurality of blocks based on costs associated with the refined motion vector, the direct mode motion vector, and the best intra prediction mode, and in particular, the method that yields the most favorable (e.g., lowest) cost, or an otherwise acceptable cost. The reconstruction module 132 completes the motion compensation by generating residual luma and/or chroma pixel values for each block of the plurality of blocks.

The forward transform and quantization module 126 generates the processed video signal 161 by coding and quantizing the residual pixel values into quantized transformed coefficients that can be further coded, such as by entropy coding in entropy coding module 124 and filtered by de-blocking filter module 222. In at least one embodiment, further formatting and/or buffering can optionally be performed by signal interface 104.

While not expressly shown, video encoder 102 can include a memory cache, shared memory, a memory management module, a comb filter or other video filter, and/or other module to support the encoding of video signal 160 into processed video signal 161.

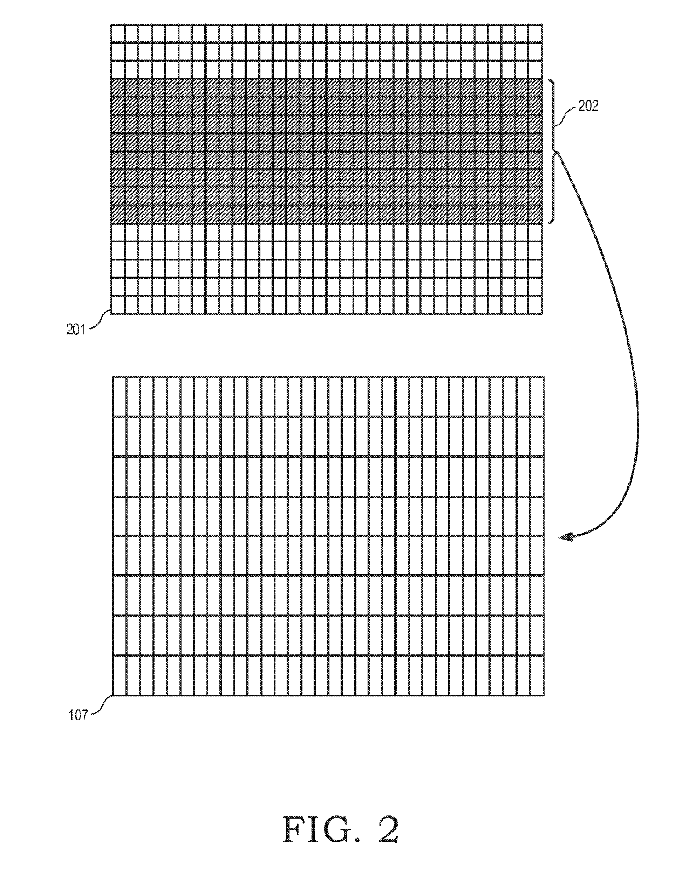

FIG. 2 illustrates a block diagram depicting the transfer of a selected subset of a reference picture 201 to the reference picture cache 107 in accordance with at least one embodiment. In the illustrated example of FIG. 2, the reference picture 201 is sized at 32X16 pixels. The reference picture cache 107 is sized such that it can only store a maximum of 32X8 pixels. Accordingly, to calculate motion vectors for a current picture, the motion search module 108 selects subsets of the reference picture 207, each sized at 32X8 pixels, for transfer to the reference picture cache 107. The motion search module 108 accesses the subset at the reference picture cache 107 to calculate the motion vectors for the next block row of the current picture. In the illustrated example of FIG. 2, the motion search module 108 has identified a subset 202 of the reference picture 201 based on a set of motion vectors (not shown) calculated based on a previous block row of the current picture. The motion search module 108 transfers the subset 202 to the reference picture cache 107 and accessed the subset 202 to calculate the motion vectors for the next block row of the current picture.

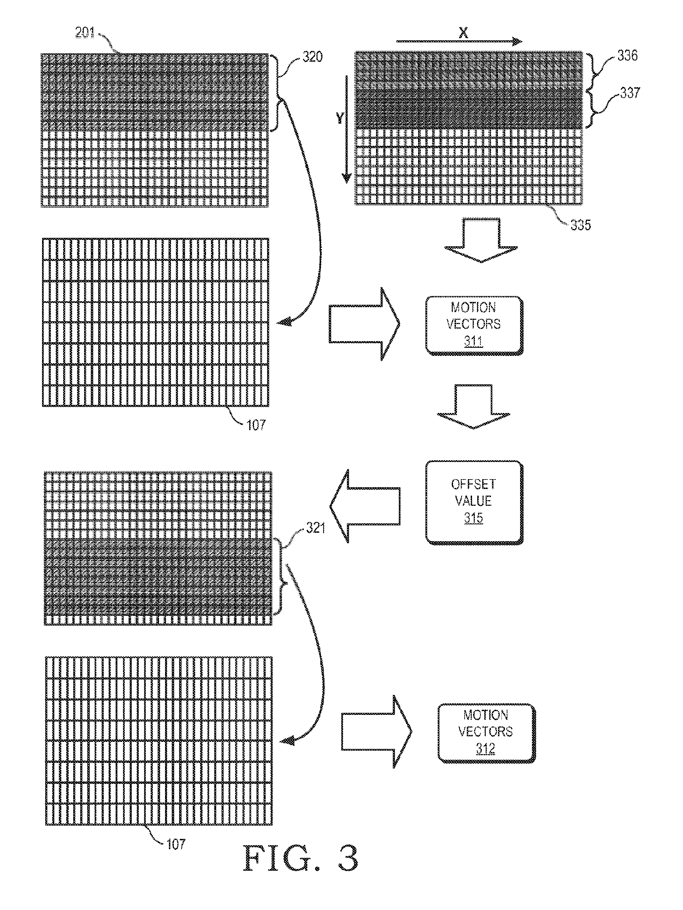

FIG. 3 illustrates a block diagram depicting the selection of different subsets of the reference picture 201 to perform motion compensation in accordance with at least one embodiment. In the illustrated example, the motion search module 108 identifies sets of motion vectors for block rows of a current picture 335. In response to an indication from the processing module 106 that the current picture 335 is ready for motion search, the motion search module 108 identifies a subset 320 of the reference picture 201, and transfers the subset 320 to the reference picture cache 107. In at least one embodiment, the subset 320 is based on an offset from another subset used to perform motion search on a downscaled representation of the reference picture 201, wherein the offset is calculated based on a combination of motion vectors as described further herein. In at least one embodiment, the subset 320 is based on an offset calculated using motion vectors used to encode a previous received picture.

The motion search module 108 identifies block row 336 of the current picture 335 as the first row for which motion search is to be performed. Accordingly, the motion search module 108 divides the block row 336 into blocks (e.g. macroblocks), and performs motion search for the blocks. In particular, the motion search module 108 accesses the subset 320 at the cache 107 to compare blocks of the subset 320 to sub-blocks of block row 336, as described above with respect to FIG. 1. Based on these comparisons, the motion search module 108 generates a set of motion vectors 311, each motion vector indicating the displacement of one of the blocks of block row 336 from a corresponding block of the subset 320.

The motion search module 108 selects the y-component of each of the motion vectors 311 and performs a linear regression on the y-components to generate an offset value 315. In the example of FIG. 3, it is assumed that the offset value 315 is -3 pixels indicating that the blocks of block row 336 are offset by an average of 3 pixels in the vertical direction (i.e. "upward") relative to their corresponding blocks in the reference picture 201. This indicates that the displacement of blocks of the next block row, block row 337, is likely to be at or around -3 pixels as well. Accordingly, the motion search module 108 uses the offset value 315 to select a subset 321 of the reference picture 201. In at least one embodiment, the motion search module 108 selects the subset 320 by subtracting the offset value 315 from the y-component of the corners of the next block row to be encoded, i.e. block row 337, then selecting the corners of the subset 321 so that in includes the resulting values. Thus, in the illustrated example, the corners of block row 337 are defined by the pixels at locations (0, 4), (31, 4), (0, 7), (31, 7). Accordingly, by subtracting the offset value 315 of (0,-3) from each of these values, the motion search module 108 identifies the values as (0,7), (31, 7), (0, 10), (31, 10). Accordingly, the motion search module 108 selects the subset 321 because it includes those values.

The motion search module 108 transfers the selected subset 321 to the reference picture cache 107. Subsequently, the motion search module accesses the subset 321 at the reference picture cache 107 to identify a set of motion vectors 312 for the block row 337. The motion search module 108 can then use the motion vectors 312 to select a subset of the reference picture 201 for the next block row of the current picture 335, transfer the selected subset to the reference picture cache 107, use the transferred subset to identify the set of motion vectors for the next block row, and so on until sets of motion vectors have been identified for all block rows of the current picture 335.

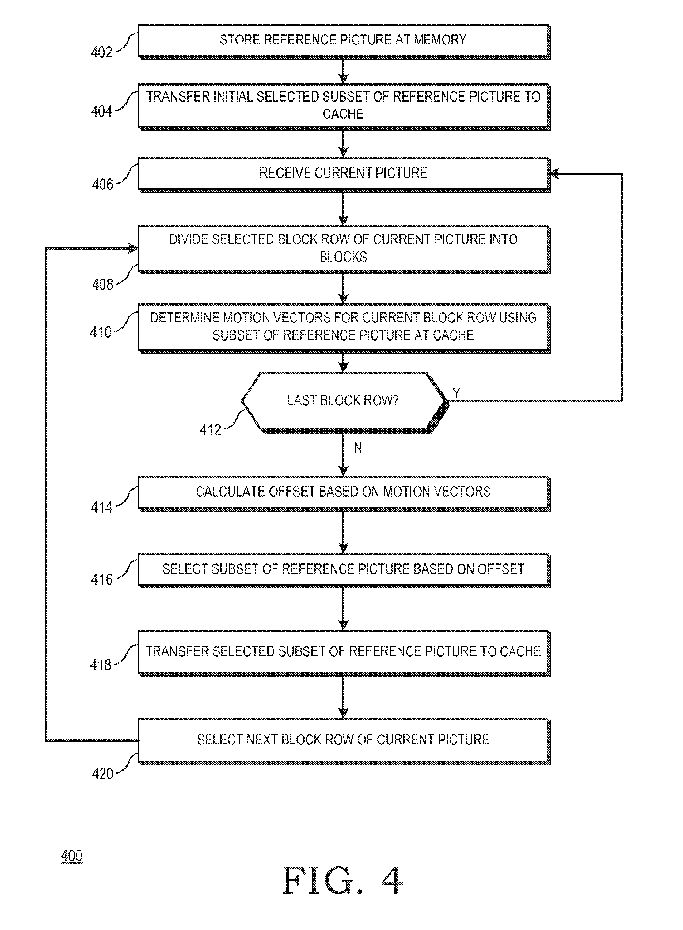

FIG. 4 illustrates a flow diagram of a method 400 of performing motion search for processing video in accordance with some embodiments. For purposes of description, the method 400 is described with respect to an example implementation at the video encoder 100 of FIG. 1. At block 402, the video encoder 100 receives a reference picture via the video signal 160 and stores it at the memory module 122. At block 404 the processing module 106 selects an initial selected subset of the reference picture to the reference picture cache 107. In at least one embodiment, the initial selected subset is selected by performing motion search on a downscaled current picture as compared to a downscaled reference picture, wherein the motion search results in a set of motion vectors. The set of motion vectors based on the downscaled pictures are used to calculate an offset in similar fashion to other offsets described herein. For example, the offset can be calculated by averaging or performing a linear regression on the Y components of the set of motion vectors. The motion search module then adds the offset to a predefined set of pixel locations to select the initial subset of the reference picture 201. In at least one embodiment, the initial selected subset is a subset having as one of its corners the pixel at (0, 0) of the reference picture and consisting of a rectangle of contiguous pixels that will fill the reference picture cache 107. Thus, for example, if the size of the reference picture cache is 1600X400, the initial selected subset of the reference picture is the subset composed of the pixels in the rectangle having corners at (0, 0), (1599, 0), (0, 399), and (1599,399).

At block 406 the motion search module 108 receives a current picture to be encoded and selects a first block row of the current picture for motion search. At block 408 the motion search module 108 divides the selected block row into blocks. At block 410, the motion search module 108 determines a set of motion vectors for the blocks of the selected block row using the selected subset of the reference picture that is stored at the reference picture cache 107. At block 412, the motion search module 108 identifies whether a set of motion vectors has been determined for each and every block row of the current picture. If so, the method flow returns to block 406 and the motion search module 108 begins determining motion vectors for the next picture of the video signal 160.

Returning to block 412, if the motion search module 108 identifies a next block row for which motion vectors have not been identified, the method flow moves to block 414 and the motion search module calculates an offset value based on the previously determined set of motion vectors. At block 416 the motion search module 108 selects a subset of the reference picture based on the offset value and, at block 418 the motion search module 108 transfers the selected subset of the reference picture to the reference picture cache 107. At block 420 the motion search module 108 selects the next block row for the current picture, and the method flow returns to block 408 for determination of the set of motion vectors for the newly selected block row.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method implemented at a video encoder, comprising:
storing a first subset of pixels of a reference picture of a video signal at a cache of the video encoder, the cache having a smaller size than the reference picture; and
performing motion search for a first frame of the video signal based on a comparison of at least a portion of the first frame to the first subset of pixels stored at the cache.

2. The method of claim 1, further comprising:
identifying a set of motion vectors based on a second frame of the video signal; and
selecting the first subset of pixels of the reference picture based on the set of motion vectors.

3. The method of claim 2, wherein selecting the first subset of pixels of the reference picture comprises:
calculating an offset value based on components of the set of motion vectors for a first direction; and
selecting the first subset of pixels of the reference picture based on the offset value.

4. The method of claim 3, wherein calculating the offset value comprises averaging the components of the set of motion vectors.

5. The method of claim 3 or 4, wherein calculating the offset value comprises performing a regression analysis based on the components of the set of motion vectors.

6. The method of claim 3, 4 or 5, wherein the first direction is a vertical direction or a horizontal direction.

7. The method of any preceding claim, further comprising:
storing a second subset of pixels of the reference picture at the cache, the second subset of pixels different from the first subset of pixels; and
performing motion search for a second frame of the video signal based on a comparison of at least a portion of the second frame to the second subset of pixels stored at the cache.

8. A video encoder, comprising:
a cache; and
a motion search module to:
store a first subset of pixels of a reference picture of a video signal at the cache of the video encoder, the cache having a smaller size than the reference picture; and
perform motion search for a first frame of the video signal based on a comparison of at least a portion of the first frame to the first subset of the reference picture stored at the cache.

9. The video encoder of claim 8, wherein the motion search module is further to:
identify a set of motion vectors based on a second frame of the video signal; and
select the first subset of pixels based on the set of motion vectors.

10. The video encoder of claim 9, wherein the motion search module is further to select the first subset of the reference picture by:
calculating an offset value based on components of the set of motion vectors for a first direction; and
selecting the first subset of pixels based on the offset value.

11. The video encoder of claim 10, wherein calculating the offset value comprises averaging the components of the set of motion vectors.

12. The video encoder of claim 10 or 11, wherein calculating the offset value comprises performing a regression analysis based on the components of the set of motion vectors.

13. The video encoder of any of claims 10 to 12, wherein the first direction is a vertical direction.

14. The video encoder of any of claims 10 to 12, wherein the first direction is a horizontal direction.

15. Computer software which, when executed by a computer, is arranged to perform a method according to any of claims 1 to 7; optionally the computer software is stored on a computer readable medium.
